# EUROPÄISCHE PATENTSCHRIFT

(11) **EP 0 553 692 B1**
(45) Veröffentlichungstag und Bekanntmachung des Hinweises auf die Patenterteilung: **27.03.1996**
(21) Anmeldenummer: 93100747.0
(22) Anmeldetag: 19.01.1993
(51) Int. Cl.: A61C 1/00, A61C 19/00

(54) **Bedienpaneel für ein zahnärztliches Gerät**
Control panel for dental apparatus
Bandeau de commande pour un appareil dentaire

(30) Priorität: 29.01.1992 DE 4202438
(43) Veröffentlichungstag der Anmeldung: 04.08.1993
(73) Patentinhaber: SIEMENS AKTIENGESELLSCHAFT, D-80333 München (DE)
(72) Erfinder: Baum, Marcus, Dipl.-Ing., W-6140 Bensheim 3 (DE); Born, Markus, Dipl.-Ing., W-6332 Ehringshausen (DE); Moritz, Günther, W-6840 Lampertheim (DE); Stöckl, Klaus, Dipl.-Ing., W-6140 Bensheim 3 (DE)

(56) Entgegenhaltungen:
- WO-A-84/04982
- WO-A-89/05613
- DE-A- 3 817 347
- US-A- 4 894 493

## Beschreibung

Die Erfindung bezieht sich auf ein Bedienpaneel gemäß dem Oberbegriff von Anspruch 1.

Ein derartiges Bedienpaneel ist aus der WO-A-84104982 oder der DE-A-3 717 325 bekannt.

Bei Bedienpaneelen der vorgenannten Gattung werden die Bedienfelder heute vornehmlich in Folientechnik ausgeführt, indem Folientastaturen auf eine Trägerfläche aufgesetzt oder auch hinter einen Rahmen geklebt werden. Ein Bedienfeld dieser Art ist beispielsweise aus dem Firmenprospekt "KaVo-SYSTEMATICA 1062" Nr. WDE PR-NO. 829712 VI 91 der Firma Kaltenbach & Voigt, Biberach, bekannt. Bei einer solchen Anordnung entsteht immer ein Randspalt, an dem sich Schmutz und Feuchtigkeit ansammeln kann. Hinzu kommt, daß eine Reinigung und Desinfektion der Oberfläche relativ schlecht möglich ist. Ein weiterer Nachteil ist darin zu sehen, daß die Folientastatur relativ leicht beschädigt werden kann.

Aus der EP-A1-0 366 832 ist es bekannt, zum Schutz einer Folientastatur über diese eine starre Platte aus Metall (Aluminium oder Messing) oder Holz anzuordnen. Die starre Platte ist so dick, daß die darunterliegende Folientastatur bei Druck auf die Platte nicht einwandfrei betätigbar ist, sei es, daß keine Taste anspricht oder daß mehrere Tasten zugleich ansprechen. Um die Tastatur betätigen zu können, wird in dem Dokument vorgeschlagen, in der Platte, und zwar über den jeweiligen Tastenbereichen der Folientastaturen, Zonen verminderter Steifigkeit vorzusehen. Die Zonen verminderter Steifigkeit können durch Änderungen in den Materialeigenschaften der Platte an der jeweiligen Stelle erreicht werden. Alternativ können an den entsprechenden Stellen Ausnehmungen vorgesehen sein, die gegen die Folien hin offen sind und so tief gewählt sind, daß der über der Ausnehmung verbleibende Plattenteil eine genügende Elastizität aufweist, um den Fingerdruck zur Tastenbetätigung auf die Taste weiterzugeben.

Aus der US-PS 4 382 165 ist eine Tastatur bekannt, bei der zwei die Schaltelemente beinhaltende Leiterbahnen sandwichartig zwischen zwei starren Platten angeordnet sind.

Aus der DE-C2-3 717 325 ist ein transparentes berührungsempfindliches Schaltfeld bekannt, welches einen transparenten berührungsempfindlichen Kontaktbereich mit einer Vielzahl von in einem zweidimensionalen Raster angeordneten Einzelkontakten aufweist. Der Kontaktbereich besteht aus einer oberen Platte aus transparentem Kunststoffilm und einer unteren Platte aus ähnlichem transparentem Material und einer dazwischen befindlichen isolierenden Abstandshalterung. Die Kontaktanordnung ist auf einer Grundplatte aus ebenfalls transparentem Kunststoff montiert.

Bei diesem Schaltfeld wird in erster Linie angestrebt, daß kein Fremdmaterial in den Lichtweg eingebracht oder eingeschlossen werden kann, um so sicherzustellen, daß das Bild der Sichtanzeige, das durch den berührungsempfindlichen Schalter gesehen wird, weder verzerrt noch unterbrochen wird. Weiterhin soll die Bildung von Newton'schen Ringen, die sich durch die Luftschicht zwischen der unteren Platte und der Grundplatte bilden würden, verhindert werden.

Der im Anspruch 1 angegebenen Erfindung liegt die Aufgabe zugrunde, ein Bedienpaneel für ein zahnärztliches Gerät zu schaffen, bei dem das Bedienfeld die im medizinischen Anwendungsbereich heute gestellten Anforderungen an Hygiene erfüllt. Das Bedienfeld soll insbesondere keine Randspalte aufweisen, an denen sich Schmutz und Feuchtigkeit festsetzen und damit auch Keime vermehren können und soll ferner optimal zu reinigen bzw. zu desinfizieren sein.

Dadurch, daß die Frontplatte mit einem umlaufenden seitlichen Rand versehen ist, der sich von der Bedienseite weg gerichtet erstreckt, und der Rand integraler Bestandteil der Frontplatte ist und so einen frontseitig geschlossenen und das Bedienfeld umgreifenden Rahmen bildet, ist insbesondere eine optimale Reinigung und Desinfektion gegeben. Der Rahmen kann leicht an einem Träger befestigt werden und weist keinerlei Randspalte auf. Vorteilhafterweise werden als Sensormittel sogenannte Druck-und Positionssensoren nach der FPSR-(force and position sensor resisting) Technologie, alternativ Piezosensoren, eingesetzt. Die Frontplatte besteht vorteilhafterweise aus Glas, wodurch die Sensormittel sowohl vor mechanischer Beschädigung als auch vor schädigenden Einflüssen durch die in der Dentalpraxis verwendeten chemischen Materialien geschützt sind.

Nachfolgend wird ein Ausführungsbeispiel der Erfindung näher erläutert.

Es zeigen:
Figur 1 ein Bedienpaneel für ein zahnärztliches Gerät in einer schaubildlichen Darstellung,

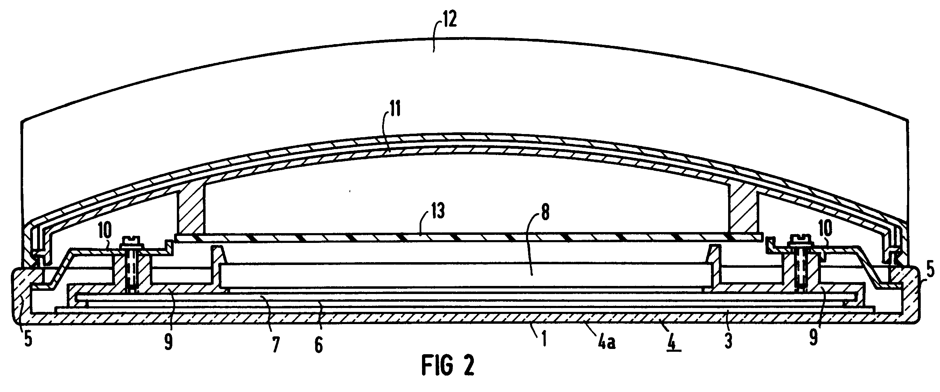

Figur 2 das Bedienpaneel im Querschnitt entlang der Linie II-II in Figur 1,
Das Bedienpaneel ist einem in der Zeichnung nicht dargestellten zahnärztlichen Gerät zugeordnet und dazu bestimmt, beispielsweise bestimmte Stuhl- und/oder Gerätefunktionen anwählen und auslösen zu können. Das Bedienpaneel enthält ein Bedienfeld 1 mit mehreren, beidseitig angeordneten Tastflächen 2, denen Sensormittel 3 der eingangs genannten Art zugeordnet sind. Nachdem die Sensormittel nicht Gegenstand der Erfindung sind, vielmehr bekannter, handelsüblicher Bauart (z.B. Piezoelemente), ist der Aufbau dieser Sensormittel in der Zeichnung nicht näher dargestellt. Die Sensormittel 3 sind der Bedienseite zugewandt von der Frontplatte 4a eines Glasrahmens 4 bedeckt. Die Frontplatte 4a ist eben und hat eine Wandstärke von etwa 1 bis 2 mm. Die Frontplatte 4a geht in einen umlaufenden seitlichen Rand 5 über. Dieser Rand 5 ist integraler Bestandteil des Glasrahmens 4. In der gezeigten Ausführung ist der Glasrahmen einteilig ausgebildet; es liegt jedoch im Rahmen der Erfindung, diesen mehrteilig auszuführen und die einzelnen Teile in geeigneter Weise, z.B. durch Kleben, miteinander zu verbinden.

Die Sensormittel 3 sind sandwichartig zwischen der Frontplatte 4a des Glasrahmens 4 und einer Auflageplatte 6 angeordnet. Vorteilhafterweise sind die Sensormittel mit der Auflageplatte 6 und mit dem Glasrahmen 4 verklebt. Dadurch werden undefinierte Spalte zwischen dem Glasrahmen und den Sensormitteln vermieden und Fehlfunktionen weitgehend ausgeschaltet. Die Auflageplatte 6 ist aus Stabilitätsgründen etwa 1 bis 2 mm stark. Hinter der Auflageplatte befindet sich eine Anzeigeeinheit 7 in Form eines LCD's, die mit leichter Vorspannung an der Auflageplatte 6 plan anliegt. Mit dieser Anordnung läßt sich die Stärke der Auflageplatte reduzieren. Alternativ zu dieser Anordnung kann die Anzeigeeinheit 7 direkt plan an den Sensormitteln anliegen; damit kann auf die Auflageplatte verzichtet werden. Auflageplatte 6 und Anzeigeeinheit 7 sind zusammen mit einer Beleuchtungseinheit 8 an einem Montage- und Justierrahmen 9 befestigt. Letzterer ist wiederum mit Halte- und Rastelementen 10 am Glasrahmen 4 so befestigt, daß sich eine kompakte Montageeinheit ergibt. Diese Montageeinheit ist in hier nicht erkennbarer Weise, z.B. durch Verschrauben mit dem Teil 9, an einem Träger 11 gehaltert, an dem rückseitig ein Deckel 12 in Schnapp-Technik aufgesetzt und frontseitig eine, die erforderliche Ansteuerelektronik für die Sensormittel sowie für die Beleuchtung aufnehmende Platine 13 befestigt ist.

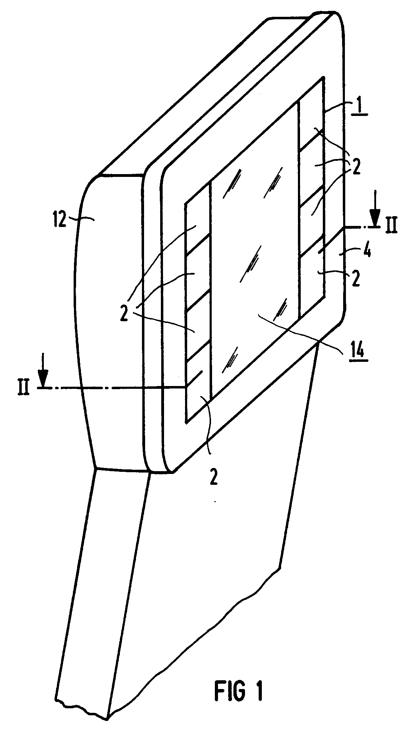

Alternativ zu den erläuterten, auf Kraftänderung ansprechenden Piezoelementen können auch auf Kraft ansprechende Elemente, z.B. Elemente nach der eingangs bereits genannten FPSR-Technologie, vorgesehen werden. Abschließend sei darauf hingewiesen, daß der Glasrahmen an sich nur in dem Bereich einer Anzeige (in Fig. 1 mit 14 bezeichnet) durchsichtig zu sein braucht.

## Patentansprüche

1. Bedienpaneel für ein zahnärztliches Gerät, welches ein Bedienfeld (1) mit mehreren Tastflächen (2) zur Betätigung von auf Einwirkung einer Kraft oder Kraftänderung ansprechenden Sensormitteln (3) enthält, welche der Bedienseite zugewandt von einer dünnen Frontplatte (4a) aus durchsichtigem Material bedeckt sind, dadurch gekennzeichnet, daß die Frontplatte (4a) mit einem umlaufenden seitlichen Rand (5) versehen ist, der sich von der Bedienseite weg gerichtet erstreckt, und der integraler Bestandteil der Frontplatte (4a) ist und so einen frontseitig geschlossenen und das Bedienfeld (1) umgreifenden Rahmen (4) bildet.

2. Bedienpaneel nach Anspruch 1, **dadurch gekennzeichnet,** daß der Rand (5) einteilig ausgebildet ist.

3. Bedienpaneel nach Anspruche 1 bis 4, **dadurch gekennzeichnet,** daß die Sensormittel (3) sandwichartig zwischen der Frontplatte (4a) und einer Auflageplatte (6) angeordnet sind und an der Auflageplatte (6) eine Anzeigeeinheit (7) anliegt.

4. Bedienpaneel nach Anspruch 1, **dadurch gekennzeichnet,** daß die Sensormittel (3) sandwichartig zwischen der Frontplatte (4a) und einer Anzeigeeinheit (7) angeordnet sind, wobei die Anzeigeeinheit (7) plan an den Sensormitteln (3) anliegt.

5. Bedienpaneel nach Anspruch 3 oder 4, **dadurch gekennzeichnet,** daß die Anzeigeeinheit ein LCD ist.

6. Bedienpaneel nach Anspruch 1, **dadurch gekennzeichnet,** daß der Rand (5) so ausgebildet ist, daß er Halteelemente (10) aufnimmt, welche mit einem Montage- und Justierrahmen (9) zusammenwirken, der die Anzeigeeinheit (7) gegen die Auflageplatte (6) drückt.

7. Bedienpaneel nach Anspruch 6, **dadurch gekennzeichnet,** daß ein Träger (11) vorhanden ist, an dem frontseitig eine Montageeinheit befestigbar ist, welche den Montage- und Justierrahmen (9), die Frontplatte (4), die Sensormittel (3), die Auflageplatte (6), die Anzeigeeiheit (7) und die Beleuchtungseinrichtung (8) enthält und an dem rückseitig ein Deckel (12) befestigbar ist.

8. Bedienpaneel nach einem der Ansprüche 1 bis 6, **dadurch gekennzeichnet,** daß zumindest die Frontplatte (4a), vorzugsweise der gesamte Rahmen (4), aus Glas besteht.

## Claims

1. Control panel for dental apparatus, containing a control section (1) with several touch areas (2) for the operation of sensor means (3) responding to the action of a force or force change, which touch areas, facing the control side, are covered by a thin front plate (4a) of transparent material, characterized in that the front plate (4a) is provided with a circumferential lateral edge (5) which extends away from the control side and is an integral component of the front plate (4a) and thus forms a frame (4) which is closed on the front side and encompasses the control section (1).

2. Control panel according to claim 1, characterized in that the edge (5) is constructed in one piece.

3. Control panel according to claims 1 to 2, characterized in that the sensor means (3) are arranged in sandwich-like manner between the front plate (4a) and a supporting plate (6), and a display unit (7) is disposed on the supporting plate (6).

4. Control panel according to claim 1, characterized in that the sensor means (3) are arranged in sandwich-like manner between the front plate (4a) and a display unit (7), with the display unit (7) lying flat on the sensor means (3).

5. Control panel according to claim 3 or 4, characterized in that the display unit is a LCD.

6. Control panel according to claim 1, characterized in that the edge (5) is constructed in such a way that it accommodates holding elements (10) which cooperate with an assembly and adjusting frame (9) which presses the display unit (7) against the supporting plate (6).

7. Control panel according to claim 6, characterized in that a support (11) is present, to which an assembly unit can be fastened on the front side, which unit contains the assembly and adjusting frame (9), the front plate (4), the sensor means (3), the supporting plate (6), the display unit (7) and the illumination device (8) and to which a cover (12) can be fastened on the rear side.

8. Control panel according to one of claims 1 to 6, characterized in that at least the front plate (4a), preferably the entire frame (4), consists of glass.

## Revendications

1. Tableau de commande pour un appareil de dentisterie, qui comporte un panneau de commande (1) comportant plusieurs surfaces tactiles (2) pour l'actionnement de moyens de détection (3) répondant à l'action d'une force ou d'une variation de force et qui sont recouverts, en direction du côté de commande, par une plaque avant mince (4a) réalisée en un matériau transparent, caractérisé par le fait que la plaque avant (4a) comporte un bord latéral périphérique (5) qui s'étend dans une direction tournée à l'opposé du côté de commande et fait partie intégrante de la plaque avant (4a) et forme ainsi un cadre (4) fermé frontalement et entourant le panneau de commande (1).

2. Tableau de commande suivant la revendication 1, caractérisé par le fait que le bord (5) est réalisé d'un seul tenant.

3. Tableau de commande suivant la revendication 1 à 4, caractérisé par le fait que les moyens de détection (3) sont disposés en sandwich entre la plaque avant (4a) et une plaque d'appui (6) et qu'une unité d'affichage (7) prend appui sur la plaque d'appui (6).

4. Tableau de commande suivant la revendication 1, caractérisé par le fait que les moyens de détection (3) sont disposés en sandwich entre la plaque avant (4a) et une unité d'affichage (7), l'unité d'affichage (7) s'appliquant à plat contre les moyens de détection (3).

5. Tableau de commande suivant la revendication 3 ou 4, caractérisé par Le fait que l'unité d'affichage est un dispositif LCD.

6. Tableau de commande suivant la revendication 1, caractérisé par le fait que le bord (5) est agencé de telle sorte qu'il loge des éléments de retenue (10), qui coopèrent avec un cadre de montage et d'ajustement (9), qui repousse l'unité d'affichage (7) contre la plaque d'appui (6).

7. Tableau de commande suivant la revendication 6, caractérisé par le fait qu'il est prévu un support (11), sur lequel peut être fixée frontalement une unité de montage, qui contient le cadre de montage et d'ajustement (9), la plaque avant (4), les moyens de détection (3), la plaque d'appui (6), une unité d'affichage (7) et le dispositif d'éclairement (8) et auquel un couvercle (12) peut être fixé sur le côté arrière.

8. Tableau de commande suivant l'une des revendications 1 à 6, caractérisé par le fait qu'au moins la plaque avant (4a) et, de préférence, l'ensemble du cadre (4) est réalisé en verre.
